# EUROPEAN PATENT SPECIFICATION

(11) **EP 2 212 201 B1**
(45) Date of publication and mention of the grant of the patent: **21.09.2011**
(21) Application number: 08837975.5
(22) Date of filing: 06.10.2008
(51) Int. Cl.: B64F 1/31, A61G 3/06

(54) **A LIFTABLE VEHICLE**
ANHEBBARES FAHRZEUG
VÉHICULE POUVANT ÊTRE ÉLEVÉ

(30) Priority: 08.10.2007 IT RM20070530
(43) Date of publication of application: 04.08.2010
(73) Proprietor: Airport Equipment Srl, 00041 Albano Laziale (RM) (IT)
(72) Inventor: CESARINI, Franco, I-00041 Albano Laziale (RM) (IT)
(74) Representative: Raimondi, Adriana
(86) International application number: PCT/IT2008/000632
(87) International publication number: WO 2009/047825

(56) References cited:
- WO-A-00/55041
- CA-C- 1 290 288
- US-A- 5 205 697
- US-A- 5 322 408
- US-A- 5 499 694
- US-A- 6 062 809

## Description

### Field of the invention

The present invention relates to a liftable vehicle provided with a single cab in which are positioned both the operator/driver of the vehicle and the load and/or passengers (in general, disabled persons). The cab is operatively connected with a flatbed bearing the motorization and the means for lifting the cab relative to said flatbed. The vehicle is further provided with platforms/gangways for boarding and disembarking persons or for loading and unloading cargo in general and/or in particular for use in airports.

### Background Art

Existing transport means (motor vehicles in general, trucks, buses, etc.) have the body platform at an average height from the ground of about 0.5-1.7 m. For cargo or persons, in particular disabled persons, to enter the transport vehicle, external equipment is used, such as forklifts and/or movable platforms actuated by hydraulic devices, described for example in FR 2.878.433, GB 2.202.202, CA 2.217.454. Such external equipment, which is normally situated in the lateral-posterior part of the vehicle, may or may not be incorporated on the transport means itself.

Another type of embodiment is described in EP 1 161 365, wherein the vehicle described is provided with a system for loading/unloading cargo and/or persons and comprises a cab for the driver and an elevating body to take passengers and/or cargo, which can be raised with respect to the frame of the vehicle.

In the embodiment described EP 1 161 365, both loading and unloading operations (of cargo or persons) are carried out using the front opening of the housing body. An extensible gangway, operatively connected with the driver's cab, assists in the loading and unloading operations of persons and things.

Another vehicle is shown in US 5 499 694, which constitutes the closest prior art.

The aforementioned transport vehicles present some drawbacks, such as their overall dimensions, which, in the whole, are large.

Moreover, the operator, who is generally is also the driver of the vehicle, must attend to its movement, to the execution and control of the numerous operations related to the raising of the elevating housing body, to the movement of the front and possibly rear gangways; additionally, the operator must watch over the correct boarding and the correct disembarking of the passengers or correct loading and unloading of cargo and certainly does not have a complete control of the passenger or of the cargo, which are placed behind the driver's seat, thus at the back of the driver, inside the housing body, in particular in the case when the driver's cab is physically separated from the body. Moreover, the presence of the driver's cab entails large longitudinal dimensions of the whole vehicle which hamper maneuvers in areas of reduced extensions, e.g. those available in case of loading/unloading small aircraft.

### Summary of the Invention

An object of the present invention is to enable the operator who maneuvers the vehicle to control and closely watch over boarding and disembarking operations of passengers or loading and unloading of cargo carried out at the ground level or at the level of the entrance or loading opening of a transport means in general and of an aircraft in particular.

Another object of the present invention is to reduce the overall dimensions of a transport vehicle of the type mentioned above, optimizing available spaces without reducing its functionality.

Yet another object is to enable the operator who maneuvers the vehicle to control and closely watch over the load or the passengers during the movement and when the vehicle shifts from the loading position to the unloading position and vice versa and during the phases of raising the load itself.

According to the present invention, it is provided a liftable vehicle, as defined by the features of claim 1, furnished with a single cab inside of which both the operator/driver of the vehicle and the load and/or passengers (in general, disabled persons) are placed. The cab, which preferably laterally houses the driver's station, is operatively connected with a flatbed which in turn comprises the engine for moving the vehicle and the means for lifting the cab with respect to the flatbed. The vehicle is further provided with platforms/gangways and slides for boarding and disembarking persons or for loading and unloading cargo in general and/or in particular for use in airports.

Preferably, the platforms/gangways are located in front and/or at the rear of the vehicle and can be operatively connected to the flatbed and/or to the cab.

Preferably, the driver's position is placed inside the cab and it is provided with controls of the joystick type (not shown). However, a driver's position on the exterior of the cab can be provided, consisting substantially in an operative console with remote controls. The joystick-like command is of the commercial type and it is advantageously of the "control stick" type used on aircraft and it groups together all the operative functions of the machine, which are easily operated with a single hand, enabling the operator to accompany, position, control the load, the passenger and/or the disabled person on board of the vehicle.

According to the invention, the lifting means for lifting the cab with respect to the flatbed are preferably of the telescopic type, e.g. like those mounted on forklifts, and they can be, for example, operated hydraulically or with other conventional means, such as electric or pneumatic jacks. These lifting means can raise the cab from the level of the vehicle frame to an opening for entry and loading in general, or to the entrance door or to the loading opening of an aircraft.

Preferably, the vehicle of the invention is provided with a lowered flatbed in order for it to be placed as close to the ground as possible and it is provided with a traditional engine, e.g. electric, internal combustion or diesel engine.

Also according to the present invention, the gangway is preferably placed at the basis on the front part of the cab and is extensible towards the entrance or loading opening in general, i.e. to the entrance door or to the loading opening of an aircraft. The slide is connected to the cab and it can be raised or lowered, with manual or mechanical overturning in a known fashion, respectively when it is in use or rest position. In this overturned non-use position, it also acts as a retaining and safety side during transport and cab operation. When the cab has to be loaded, the slide is positioned in such a way as to constitute an inclined plane connecting the base of the cab to the ground. The cab can be raised with respect to the frame of the vehicle and it can be raised by way of the lifting means provided with the flatbed to a position in which the flatbed connected thereto is at the same level as the entrance door or the loading opening of the aircraft.

### Description of a Preferred Embodiment

The present invention shall now be described with reference to a currently preferred embodiment thereof. It can be easily appreciated that many modifications can be made without departing from the scope of the invention, which is explained with reference to the enclosed figures, in which:
Figure 1 shows a schematic perspective view of the liftable vehicle according to the invention in a position in which the cab A is raised with respect to the flatbed B;
Figure 2 shows a schematic lateral view of the vehicle according to Figure 1 in a position in which the cab A is lowered on the flatbed B;
Figure 3 shows a schematic front view of the vehicle of Figure 1;

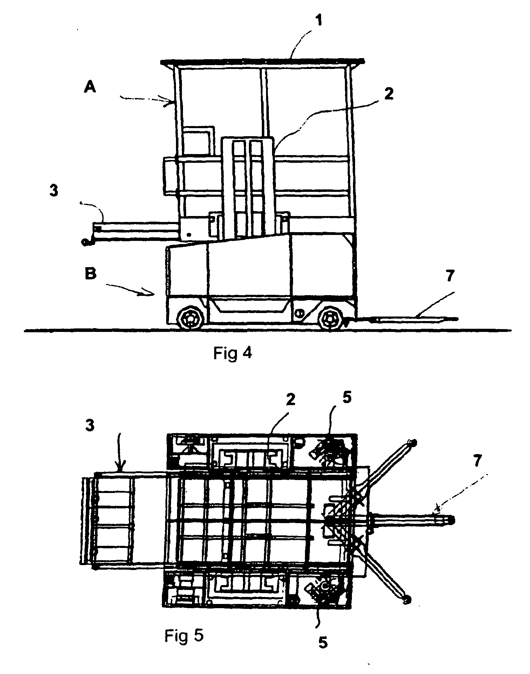

Figure 4 shows a schematic lateral view of the vehicle of Figure 1;
Figure 5 shows a schematic top view of the vehicle of Figure 1.

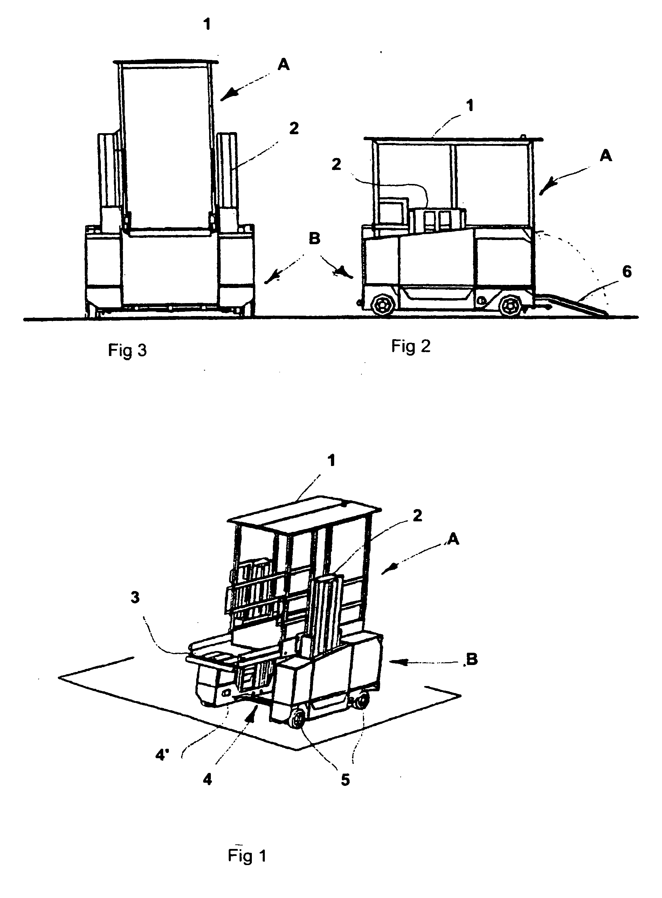

With reference to the figures, in Figure 1 the liftable vehicle according to the invention is shown in its entirety. Therein, the reference letter A generically indicates the cab that houses both the driver and the load (passengers or cargo). The driver's position is preferably a standing one possibly provided with a high seat. The joystick-like operating means (not shown) are positioned laterally, e.g. on the right side with respect to the travelling direction, in the direction of travel, inside an operative panel, generally at waist height. Alternatively, the operating means can be constituted by a remote operative console.

The cab A can be completely open or can have an upper roof 1 and can be, if needed, provided with windows. The cab A is raised with a lifting system 2 which can advantageously be a conventional telescopic lifting system.

The cab A, preferably provided with a front and a rear opening for entrance and exit, is also provided with an extensible gangway 3 preferably mounted at the opening of the front part of the vehicle and extensible longitudinally to rest on and align with an opening for entrance or loading in general, i.e. to the door for entrance or loading of an aircraft (not shown). The gangway 3 dimensions are such that in its retracted position it remains within the shape and the maximum size of the vehicle, whilst when it is in its extended position if projects outside the dimensions of the vehicle creating a projecting element such as to enable an easy alignment for a safe transfer to and from the aircraft.

To the cab A is also hinged a board 6 in the form of a slide, preferably in opposite position with respect to the gangway 3. The board or slide 6 constitutes an inclined plane that connects the base of the cab A to the ground to facilitate the loading of cargo and/or the entrance of persons. The board 6 constitutes the overturnable access ramp for positioning the cargo or the disabled passenger in a wheelchair or on stretchers which can be so operated from the ground up to boarding, easily overcoming the step between the flatbed B and the ground. The board or slide 6 can be overturned manually or mechanically to return within the shape of the vehicle and constitute a retaining and safety side during the transportation and/or the vertical movement of the cab A itself.

The flatbed B is provided with a frame 4 mounted on wheels generically indicated with 5. The flatbed B present with a rearward configuration 4' with respect to the front wheels of the flatbed B. This configuration allows for a facilitated maneuvering and operativity of the vehicle, especially in combination with the gangway 3. As a matter of fact this particular configuration of the frame cooperates with the gangway to enable boarding and disembarking, especially of disabled persons, into/out of small aircraft of the "commuter" type that have an overturnable access ladder included in the access door itself. For example in these aircraft disabled persons could not be embarked without requiring transfers or additional lifting means.

The vehicle may also be provided with towing bar 7 which can be disassemble a positioned on the frame 4, preferably at the rear end. Since the vehicle of the invention is generally provided with a small engine and reaches very low speeds (typically, below 10 kg/h), the distance it can cover are very shorts, so that the bar 7 can advantageously be used to tow the vehicle if long distances are to be covered. When it is not needed, the bar 7 can be disassembled and positioned in a housing that is preferably provided within the lateral fairings.

In a variant not shown herein, the extensible gangway 3 is built in such a way as to incorporate both the functions of a gangway extensible towards the aircraft and junction board or slide between the ground and the base of the cab A, which in this arrangement may advantageously present a single access opening.

With regards to the operation of the liftable vehicle according to the invention, the operator, who drives the vehicle from inside the cab A, approaches the aircraft in its flying arrangement and in its proximitiy (s)he gets prepared, for example, for any operation of loading or unloading cargo, persons or a disabled person. At this time, the operator maneuvers the lifting system 2 until the front part of the transport vehicle, together with the raising cab A, reaches the cargo compartment or the door of the aircraft. From the opening on the front part of the cab A the gangway 3 is sent out until it rests on the aircraft or on another entry and loading opening so that cargo, passengers, trolleys or wheelchairs for disabled persons can walk on the gangway 3 to exit from, or to be housed in the cab A. In case of aircraft with an incorporated ladder, said ladder can advantageously be incorporated within the compartment obtained between the frame 4, moved rearwards in 4', and the gangway 3 in its extended disposition, enabling a safe transfer.

The operator checks that the operations proceed correctly without moving from his/her position. This way, thanks to the arrangement according to the invention, a single operator can carry out the entire loading, unloading and transfer cycle.

Once cargo and/or passengers, who may be disabled persons, are in the lifting cab A, the operator, after retracting the extensible gangway 3, actuates the lifting system 2 downward until the lowest position of the cab is reached. Then the operator drives the vehicle to the place of transfer and during the travel (s)he has complete control of the cargo/passengers. Upon arrival, the operator controls the lowering of the board or slide 6 to its lowest position in contact with the ground, as shown in Figure 2, and the cargo or the passengers move from the cab A to the ground using the board or slide 6.

It is clear that, according to the invention, all these operations can take place with the utmost comfort and safety for those who are transported because they require only few essential operations which are all under the direct supervision of the operator who, from his/her driver's position on one side in cab A, controls the transported cargo or persons and the surrounding environment and the one external to the cab.

The vehicle of the invention is particularly advantageous for moving disabled persons and for boarding them on particular in small aircraft, with a ladder incorporated in the entrance/exit door, which for this reason would not allow to board a disabled person with known means. These advantages are achieved thanks to the fitting of the vehicle. Actually, thanks to the combination of the frame 4 in rear position in 4' and of the extended gangway 3, a compartment is created which incorporates the bulk of the aircraft ladder, thus enabling the boarding of the disabled person who from the cab A of the vehicle can be moved into the aircraft along the plane provided by the gangway 3.

Moreover, thanks to the combination of the cab A provided with an internal drive with joystick, the lowered flatbed 4, the extensible front and of the rear slide 6, the disabled person is easily picked up from the ground and moved to the maximum operating height and hence inside the aircraft with no need for further transfers or additional lifting systems and operating devices.

A further advantage of the vehicle of the invention is due to the positioning of the driver's seat, advantageously with a joystick, inside the cab in which the transported cargo or person is housed. This arrangement enables the operator to drive and simultaneously also control the transported cargo or person, making its or his/her travel safe on the route between the loading and the unloading area.

Yet another advantage of the vehicle of the present invention relates to its compactness, provided by the positioning of the driver's position inside the cab A, which thus enables its use in areas of reduced dimensions, such as those of small aircraft.

## Claims

1. A vehicle for transporting and lifting cargo and/or persons to an entrance and loading opening of an aircraft, having front and rear openings for boarding and disembarking persons and/or for loading and unloading cargo in general, and/or for use in airports, the vehicle comprising a flatbed (B) provided with frame (4) and a cab (A), which can be raised by the lifting system (2) from the level of the frame (4) of the flatbed (B), in which said cab (A) comprises a gangway (3) extensible towards the entrance and loading opening of the aircraft and a board or slide (6) hinged to the cab (A) itself opposite to the gangway (3) in such a way as to constitute an inclined plane to connect the basis of the cab (A) to the ground to facilitate the entry/exit of the load into/out of said cab (A) without additional transfers-the board or slide (6) hinged to the cab (A) being overturneable in such a way as to constitute a retaining and safety side during transportation and vertical movement; a driver's position being further provided, and wherein the cab (A), the opening with the gangway (3) and the opening with the slide (6) constitute a single compartment for the driver and for transportation and movement of the cargo.

2. Vehicle according to claim 1, **characterized in that** the driver's position is placed on one side within the cab (A) and it is provided with joystick-like controls.

3. Vehicle according to claim 1, **characterized in that** the driver's position is constituted by a remote operating console.

4. Vehicle according to any of the previous claims, **characterized in that** the frame (4) has a rearward configuration (4') with respect to the front wheels of the flatbed (B) in such away as to allow that, in combination with the gangway (3) in its extended position, a compartment is created that incorporates an access ladder of aircraft.

5. Vehicle according to any of the previous claims, **characterized in that** it comprises a removable bar (7), placed on the flatbed (B), for towing the vehicle.

## Patentansprüche

1. Fahrzeug zum Transportieren und Anheben von Fracht und/oder Personen bis zu einer Einlass- und Ladeöffnung eines Flugzeugs, mit einer vorderen und hinteren Öffnung zum Einstieg und Ausstieg von Personen und/oder zum Beladen und Entladen von Fracht im Allgemeinen, und/oder zum Gebrauch auf Flughäfen, wobei das Fahrzeug ein mit einem Fahrgestell (4) versehenes Flachbett (B) und eine Kabine (A) umfasst, die von dem Hebesystem (2) vom Niveau des Fahrgestells (4) des Flachbetts (B) aus angehoben werden kann, wobei die Kabine (A) eine Gangway (3) umfasst, die zu der Einlass- und Ladeöffnung des Flugzeugs hin ausfahrbar ist, sowie eine Tafel oder Rutsche (6), die an der Kabine (A) selbst entgegengesetzt zu der Gangway (3) in einer solchen Weise angelenkt ist, dass sie eine schiefe Ebene bildet, um die Basis der Kabine (A) mit dem Untergrund zu verbinden, um den Eintritt/Austritt der Ladung in die/aus der Kabine (A) ohne zusätzliche Umladevorgänge des Transportguts zu ermöglichen - wobei die an der Kabine (A) angelenkte Tafel oder Rutsche (6) in einer solchen Weise kippbar ist, dass sie während eines Transports und einer Vertikalbewegung eine Halte- und Sicherheitsseite bildet; wobei weiter eine Fahrerposition vorgesehen ist und wobei die Kabine (A), die Öffnung mit der Gangway (3) und die Öffnung mit der Rutsche (6) ein einziges Abteil für den Fahrer und für den Transport und die Fortbewegung der Fracht bilden.

2. Fahrzeug nach Anspruch 1, **dadurch gekennzeichnet, dass** die Fahrerposition an einer Seite innerhalb der Kabine (A) platziert ist und dass sie mit joystickartigen Bedienelementen versehen ist.

3. Fahrzeug nach Anspruch 1, **dadurch gekennzeichnet, dass** die Fahrerposition von einer Fernbedienungskonsole gebildet wird.

4. Fahrzeug nach einem der vorherigen Ansprüche, **dadurch gekennzeichnet, dass** das Fahrgestell (4) eine rückwärtige Ausbildung (4') in Bezug zu den Vorderrädern des Flachbetts (B) in einer solchen Weise aufweist, dass es ermöglicht wird, dass in Kombination mit der Gangway (3) in ihrer ausgefahrenen Position ein Abteil geschaffen wird, das eine Flugzeug-Zugangsleiter einschließt.

5. Fahrzeug nach einem der vorherigen Ansprüche, **dadurch gekennzeichnet, dass** es eine auf dem Flachbett (B) platzierte abnehmbare Stange (7) zum Schleppen des Fahrzeugs umfasst.

## Revendications

1. Véhicule pour le transport et le soulèvement de charge et/ou de personnes jusqu'à une ouverture d'entrée et de chargement d'un avion, ayant des ouvertures avant et arrière pour l'embarquement et le débarquement de personnes et/ou pour le chargement et le déchargement de charge en général, et/ou pour utilisation dans des aéroports, le véhicule comportant un plancher (B) pourvu d'un châssis (4) et une cabine (A), qui peut être soulevée par le système de levage (2) depuis le niveau du châssis (4) du plancher (B), ladite cabine (A) comportant une passerelle (3) extensible vers l'ouverture d'entrée et de chargement de l'avion et une planche ou glissière (6) articulée sur la cabine (A) elle-même à l'opposé de la passerelle (3) de manière à constituer un plan incliné afin de relier la base de la cabine (A) au sol de façon à faciliter l'entrée/sortie de la charge dans/hors de ladite cabine (A) sans transferts additionnels de la planche ou glissière (6) articulée sur la cabine (A) qui peut être retournée de manière à constituer un côté de retenue et de sécurité pendant le transport et un mouvement vertical ; une position de conducteur étant en outre prévue, et la cabine (A), l'ouverture avec la passerelle (3) et l'ouverture avec la glissière (6) constituant un compartiment simple pour le conducteur et pour le transport et le mouvement de la cargaison.

2. Véhicule selon la revendication 1, **caractérisé en ce que** la position du conducteur est placé sur un côté dans la cabine (A) et est pourvue de commandes en forme de manche.

3. Véhicule selon la revendication 1, **caractérisé en ce que** la position du conducteur est constituée par un pupitre de commande à distance.

4. Véhicule selon l'une quelconque des revendications précédentes, **caractérisé en ce que** le châssis (4) a une configuration arrière (4') par rapport aux roues avant du plancher (B) de manière à permettre que, en combinaison avec la passerelle (3) dans sa position sortie, l'on crée un compartiment qui incorpore une échelle d'accès d'avion.

5. Véhicule selon l'une quelconque des revendications précédentes, **caractérisé en ce qu'**il comporte une barre démontable (7), placée sur le plancher (B), afin de remorquer le véhicule.
